# FASCICULE DE BREVET EUROPEEN

(11) **EP 2 235 890 B1**
(45) Date de publication et mention de la délivrance du brevet: **21.06.2017**
(21) Numéro de dépôt: 09704208.9
(22) Date de dépôt: 16.01.2009
(51) Int. Cl.: H04L 12/70

(54) **SYSTÈME DE COMMUNICATION IP ENTRE LE SOL ET UN VÉHICULE**
IP-KOMMUNIKATIONSSYSTEM ZWISCHEN DEM BODEN UND EINEM FAHRZEUG
IP COMMUNICATION SYSTEM BETWEEN THE GROUND AND A VEHICLE

(30) Priorité: 16.01.2008 FR 0850252
(43) Date de publication de la demande: 06.10.2010
(73) Titulaire: ALSTOM Transport Technologies, 93400 Saint-Ouen (FR)
(72) Inventeur: MENACEUR, Djamil-Fayçal, J8G 1A2 Quebec (CA); RUFFOLO, Frank, Quebec J6Z4J7 (CA)
(74) Mandataire: Lavoix
(86) Numéro de dépôt international: PCT/FR2009/050062
(87) Numéro de publication internationale: WO 2009/092973

(56) Documents cités:
- EP-A- 1 292 074
- EP-A- 1 705 810
- WO-A-2005/022839
- ALBRECHT M ET AL: "IP services over Bluetooth: leading the way to a new mobility" LOCAL COMPUTER NETWORKS, 1999. LCN '99. CONFERENCE ON LOWELL, MA, USA 18-20 OCT. 1999, LOS ALAMITOS, CA, USA,IEEE COMPUT. SOC, US, 18 octobre 1999 (1999-10-18), pages 2-11, XP010358529 ISBN: 978-0-7695-0309-7

## Description

L'invention a pour domaine celui de la communication IP entre un ordinateur au sol et un ordinateur embarqué à bord d'un véhicule terrestre tel qu'un train, un tramway, un métro, une automobile ou l'équivalent.

Pour l'échange de données entre un ordinateur fixe, au sol, et un ordinateur mobile, embarqué à bord d'un véhicule, on connaît, par le document WO 2005/02 2839 A1, une architecture utilisant une infrastructure de communication intermédiaire apte à établir une liaison sans fil avec une passerelle mobile, embarquée à bord du véhicule et à laquelle est connecté l'ordinateur mobile. L'infrastructure de communication comporte une pluralité de stations de base. Chaque station de base peut établir une liaison sans fil avec la passerelle mobile grâce à des moyens de communication radio lorsque le véhicule se trouve à l'intérieur de la cellule de couverture de ladite station de base. Les différentes stations de base sont agrégées entre elles et connectées par l'intermédiaire d'une passerelle intermédiaire (« Foreign Agent ») à un réseau IP. Une fois la liaison sans fil établie, la passerelle intermédiaire attribue à la passerelle mobile une adresse IP sur le réseau IP et constitue, de ce fait, un point d'accès au réseau IP. L'architecture connue comporte également une passerelle principale permettant d'assurer le routage des datagramme IP à destination de l'ordinateur mobile vers la passerelle intermédiaire adaptée. En communication montante, un datagramme IP est directement routé vers l'ordinateur fixe.

Dans cette architecture connue, il n'existe qu'une unique passerelle intermédiaire pour toutes les stations de base d'une même infrastructure de communication. C'est la passerelle intermédiaire qui configure la couche logique de la connexion entre la passerelle intermédiaire et la passerelle mobile à chaque nouvelle liaison sans fil. L'aspect temporel du passage d'une cellule à une autre de la même infrastructure n'est pas une contrainte dans cette architecture, dont les performances sont réduites.

Par ailleurs, les moyens de communication radio équipant une station de base n'ont qu'une portée réduite couvrant une zone géographique élémentaire ou cellule. Ainsi, en tant que juxtaposition de stations de base, une infrastructure ne peut établir de liaison avec un équipement mobile que dans une zone de couverture bien délimitée correspondant aux différentes cellules.

De plus, il est possible que, dans la zone de couverture d'une infrastructure, il existe une zone d'ombre où la propagation des ondes électromagnétiques est perturbée ou bloquée par la présence d'obstacles entre la station de base et le véhicule. C'est par exemple le cas lorsqu'un train passe sous un tunnel et que la liaison avec les stations de base d'une infrastructure GSM est coupée.

Pour palier l'existence de zones d'ombres ou bien la taille réduite de la zone de couverture, plusieurs infrastructures au sol sont déployées pour recouvrir l'ensemble de la zone à l'intérieure de laquelle le véhicule est sensé devoir se déplacer. Par exemple, un équipement mobile qui utilisait une première infrastructure GSM dans un premier pays, se connecte à une seconde infrastructure GSM disponible dans un second pays lors du passage de la frontière entre ces deux pays.

Dans ce document, on dira que deux infrastructures de communication sont de technologies différentes lorsqu'elles mettent en oeuvre des protocoles de communication différents pour la liaison sans fil (Wifi versus Wimax ou Wifi versus GSM, par exemple).

L'invention a donc pour but d'améliorer les performances de transfert intercellulaire au sein d'une infrastructure de communication, tout en autorisant également un transfert intercellulaire entre cellules d'infrastructures différentes, pour assurer la continuité d'une communication entre un équipement fixe au sol et un équipement mobile embarqué, lors du basculement entre deux cellules différentes.

L'invention a pour objet un système de communication IP entre un premier équipement informatique fixe, au sol, connecté à un premier réseau local, et un second équipement informatique mobile, embarqué à bord d'un véhicule d'une pluralité de véhicules, selon la revendication 1.

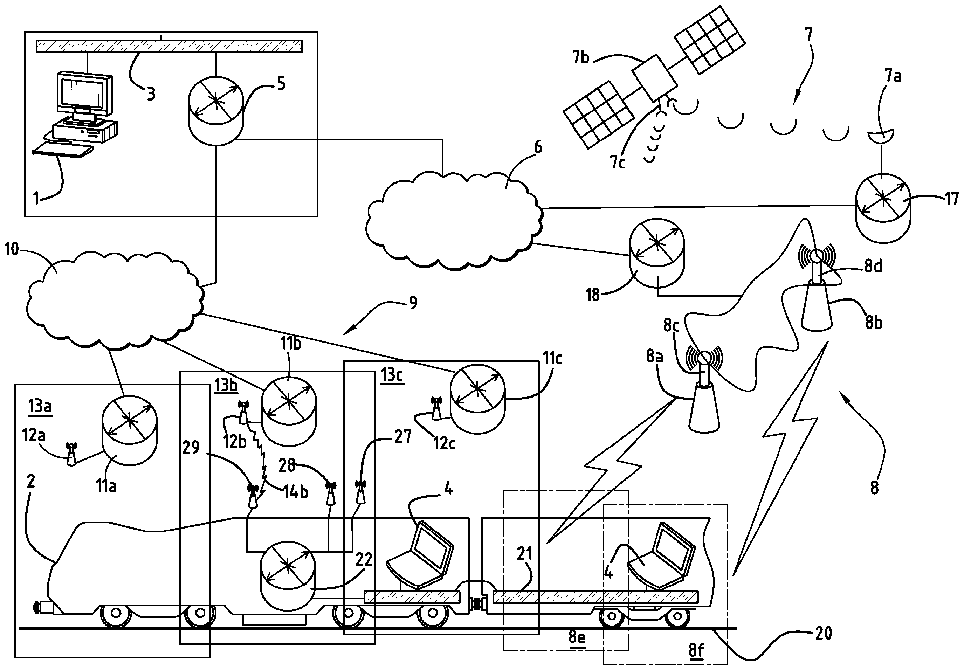

L'invention et ses avantages seront mieux compris à la lecture de la description qui va suivre, donnée uniquement à titre d'exemple, et faite en se référant au dessin annexé, sur lequel la figure 1 est une représentation schématique de l'architecture selon l'invention. Le système de communication est propre à établir et à maintenir une communication bidirectionnelle au format IP entre un premier équipement, fixe, au sol, et un second équipement mobile embarqué, à bord d'un véhicule quelconque appartenant à une flotte de véhicules.

Le premier équipement est un ordinateur 1 connecté à un premier réseau local 3 qui est un réseau privé appartenant à l'exploitant du train 2. Le second équipement, à bord du train 2, est un ordinateur de contrôle 4 relié à différents capteurs et à différents actionneurs. L'ordinateur 4 est connecté à un second réseau local 21 à bord du train 2.

### RESEAU GLOBAL

La communication entre les ordinateurs 1 et 4 se fait au travers d'une architecture qui, à un niveau supérieur, constitue un réseau global en forme d'arbre dont le noeud racine est un routeur principal 5, connecté au premier réseau 3, et les noeuds de plus bas niveau sont des routeurs mobiles embarqués à bord des trains. Chaque train de la flotte comporte un routeur mobile connecté au second réseau du train considéré. Entre le noeud racine et le noeud de plus bas niveau, le réseau global comporte différents noeuds intermédiaires. En particulier, les noeuds intermédiaires situés juste au-dessus des noeuds de plus bas niveau seront dénommés routeurs de base dans ce qui suit. Les routeurs de base 11 a-c, 17 et 18 sont fixes au sol.

La connexion entre un routeur de base, au sol, et un routeur mobile, embarqué, s'effectue par l'intermédiaire d'une liaison sans fil d'une manière qui sera décrite ci-après. Au cours du temps et du déplacement du train, le routeur mobile est apte à se déconnecter d'un premier routeur de base et à se connecter à un second routeur de base. Ainsi, la topologie du réseau globale évolue au cours du temps, en fonction des connexions effectives, à un instant donné, entre les noeuds de plus bas niveau et les noeuds du niveau juste supérieur.

Un routeur participe à l'acheminement d'un datagramme IP le long d'un chemin de routage particulier du réseau global. Il comporte des moyens de mémorisation, du type mémoire vive, dans lesquels est stockée une table de routage et une file de données permettant le stockage temporaire de datagrammes IP. Un routeur comporte des moyens de mise à jour de sa table de routage. La structure des tables de routage de chaque type de routeur sera décrite en détail ci-dessous.

### RESEAU SOUS-JACENT ET INFRASTRUCTURE

A un niveau inférieure de l'architecture, la communication entre deux noeuds quelconques du réseau global peut se faire à travers un réseau sous-jacent. Par exemple, sur la figure 1, la communication entre le routeur principal 5 et les routeurs de base 17 et 18 se fait au travers d'un réseau sous-jacent 6.

La communication entre un routeur de base et un routeur mobile utilise une liaison sans fil qui est établie entre le routeur mobile 22 et une station de base d'une infrastructure de communication à laquelle est relié au moins un routeur de base. Un routeur de base associé à une infrastructure possède une adresse IP publique, fixe, sur cette infrastructure associée.

Chaque infrastructure comporte une ou plusieurs stations de base équipées de moyens de communication radio et aptes à établir une liaison sans fil dans une cellule. Lors de l'établissement d'une liaison sans fil, le routeur mobile reçoit une adresse IP publique sur l'infrastructure considérée.

Sur la figure 1, on a représenté des infrastructures de technologies différentes : une première infrastructure 7 autorisant l'établissement de liaisons sans fil de longue portée, une deuxième infrastructure 8 autorisant l'établissement de liaisons sans fil de moyenne portée, et une troisième infrastructure 9 autorisant l'établissement de des liaisons sans fil de courte portée.

La première infrastructure 7 est du type satellitaire. Une station relais 7a communique avec un satellite 7b agissant en tant que « station de base ». Les moyens de communication 7c du satellite 7b couvrent une « cellule » étendue.

Dans la seconde infrastructure 8, par exemple du type UMTS ou GSM, les stations de base 8a, 8b, équipées respectivement d'antennes 8c, 8d, couvrent des cellules associées 8e, 8f dont le rayon varie d'une centaine de mètres à quelques kilomètres.

La troisième infrastructure 9 comporte un réseau d'agrégation 10 et des stations de base 12a, 12b et 12c. Chaque station de base 12a, 12b ou 12c est équipée de moyens de communication radio, fonctionnant en émission et en réception, et apte à établir une liaison sans fil au format Wifi. En variante, des types de liaison de courte portée équivalents, telle qu'une liaison Wimax, sont envisageables. Chaque station de base 12a, 12b, 12c couvre une cellule 13a, 13b, 13c. Une liaison Wifi a une portée maximale de 300 m, réduite à moins de 100 m si un obstacle est présent sur le trajet des ondes radio. La réunion des cellules 13a, 13b, 13c forme une zone géographique de couverture continue le long de la voie 20.

Le routeur mobile 22 est équipé de moyens de communication 27, 28 et 29. Chaque moyen de communication 27, 28, 29 est spécifique à l'établissement d'une liaison sans fil avec les stations de base d'une infrastructure donnée parmi les infrastructures 7, 8 et 9. Ainsi, les moyens 27 permettent l'établissement d'une liaison du type satellitaire avec le satellite 7a de l'infrastructure 7. Les moyens 28 permettent l'établissement d'une liaison du type GSM avec l'une des stations de base 8a, 8b de l'infrastructure 8. Et, les moyens 29 permettent l'établissement d'une liaison du type Wifi avec l'une des stations de base 12a, 12b, 12c de l'infrastructure 9. Ces moyens sont indépendants entre eux de manière à permettre l'existence simultanée de liaisons sans fil avec des infrastructures différentes ou de technologie différentes.

Sur la figure 1, deux variantes de réalisation ont été représentées. En effet, une infrastructure de communication peut être soit une infrastructure propriétaire gérée par l'exploitant de la flotte de trains, soit une infrastructure gérée par un tiers. Par exemple, une infrastructure du type Wifi est typiquement du type propriétaire car son déploiement et son exploitation sont d'un coût réduit. En revanche, une infrastructure GSM ou satellitaire est une infrastructure exploitée par des tiers.

Dans le cas d'une infrastructure appartenant à un tiers, la gestion de la liaison sans fil n'est pas accessible à l'exploitant. Alors, l'architecture selon l'invention prévoit de disposer un routeur de base en amont de l'infrastructure considérée. Par exemple sur la figure 1, un routeur de base 18 est connecté entre, d'une part, le routeur principal 5 et le réseau intermédiaire 6, et, d'autre part, l'infrastructure 8. De même, un routeur de base 17 est connecté entre, d'une part, le routeur principal 5 et le réseau intermédiaire 6, et, d'autre part, l'infrastructure 7.

Par contre, dans le cas d'une infrastructure propriétaire, le propriétaire peut avantageusement placer plusieurs routeurs de base à l'intérieur de l'infrastructure, au plus près des stations de base. Par exemple, dans l'infrastructure 9, des routeurs de base 11 a, 11 b et 11 c sont respectivement disposés entre une station de base associée 12a, 12b et 12c et le réseau d'agrégation 10. En variante, plusieurs stations de base sont associées au même routeur de base. Au sein de l'infrastructure 9, les stations de base 12a, 12b, 12c sont ainsi directement connectées à un routeur de base 11 a, 11 b, 11 c de sorte qu'une seule maille sépare les routeurs de base des stations de base dans l'infrastructure 9.

La communication entre le routeur principal 5 et les différents routeurs de base 11a-c s'effectue à travers le réseau sous-jacent que forme le réseau d'agrégation 10 de l'infrastructure 9.

L'infrastructure 9 peut être une infrastructure propriétaire privée ou publique. Le principe de fonctionnement reste le même. La différence réside dans l'adressage des routeurs de base : dans le cas d'une infrastructure privée, les routeurs de base sont connectés à un réseau privé ; dans le cas d'une infrastructure publique, ils sont connectés à un Intranet, privé, appartenant au propriétaire, qui est accessible via l'Internet, publique, au moyen d'un mécanisme d'encapsulation (VPN en anglais, pour « Virtual Private Network »). Cela reste une adresse IP de routeur de base accessible au routeur mobile 22.

### FORMAT DES ADRESSES IP PRIVEES

Au niveau du réseau global, l'architecture utilise, pour les adresses IP des seconds équipements embarqués, des adresses IP privées dont le format va maintenant être décrit. Chaque second équipement est identifié par une adresse IP, codée sur 32 bits, qui lui est propre. On notera que selon la norme IPv4 actuellement en vigueur, les adresses IP sont codées sur 32 bits. Elles seront codées sur 64 bits dans la version à venir IPv6.

L'exploitant d'une ligne de chemin de fer doit suivre, en temps réel, plusieurs trains qui forment ensemble une flotte de trains. Cette flotte est caractérisée par un identifiant <Flotte ID> unique, codée sur X bits.

Un train particulier de cette flotte est repéré, au sein de la flotte, par un identifiant <véhicule ID> unique, codé sur Y bits. Ainsi le train 2 est identifié par l'identifiant ID2. Selon l'invention, chaque train ne comporte qu'un unique second réseau local équipé d'un unique routeur mobile. Ainsi, le train 2 comporte un unique second réseau local 21 relié à un unique routeur mobile 22. Alors, l'identifiant d'un véhicule <véhicule ID> caractérise également le routeur mobile embarqué dans ce véhicule.

Un second équipement informatique embarqué est référencé par un identifiant <équipement ID> unique, codé sur [32-X-Y] bits. L'ordinateur 4 est identifié par le numéro ID4 sur le second réseau local 21 du train 2 sur lequel il est connecté.

Selon l'invention, l'adresse IP d'un second équipement embarqué est définie, de façon unique, par la concaténation des identifiants de flotte, de véhicule et d'équipement selon l'expression : IP équipement = <flotte ID> (véhicule ID> <équipement ID>.

Ainsi l'ordinateur 4 a pour adresse IP : IP4 = <flotte ID>.ID2.ID4.

Par convention, l'adresse IP du routeur mobile 22 du réseau local 21 est (flotte ID>.ID2.<0...1>. Le masque de sous réseau du réseau local 21 est <flotte ID>. ID2.<0...0>.

On constate alors que les seconds réseaux embarqués à bord des véhicules de la flotte constituent, ensemble, un seul et unique segment du réseau global et qu'un second réseau particulier constitue un sous-segment de ce segment. Le segment « flotte » est ainsi constitué de sous-segments « trains » éparpillés.

Cette méthode d'adressage à plat mise en oeuvre au niveau du réseau global présente de nombreux avantages. Il n'y a tout d'abord pas de conflit d'adressage au sein du réseau global et ceci quels que soient les trains effectivement en circulation à un instant donné. De plus, lors de l'attelage de deux trains, il n'y a pas besoin d'installer un ordinateur passerelle entre chacun des deux seconds réseaux locaux, et les équipements à bord du second train sont "visibles" sans avoir à reconfigurer le réseau global.

De plus, en exécutant un algorithme de décodage des adresses IP privées écrites selon ce format, chaque routeur peut avantageusement ne tenir à jour qu'une table de routage simplifiée comportant l'identifiant du véhicule <véhicule ID> comme cela sera décrit ci-dessous.

### ROUTAGE

En utilisant une telle méthode d'adressage IP, l'architecture de communication peut réutiliser les structures de routage existantes des réseaux sous-jacents. Mais, les datagrammes initiaux, dont l'en-tête comporte l'adresse IP privée d'un ordinateur destinataire, ne peuvent être routés par les routeurs d'un réseau sous-jacent qui ne reconnaissent pas ces adresses IP privées. Dans ce cas, la communication entre deux noeuds du réseau global s'effectue en encapsulant un datagramme initial dans un datagramme intermédiaire apte à être routé par le réseau sous-jacent reliant les deux noeuds considérés. Le datagramme initial apparaît alors comme la charge utile du datagramme intermédiaire. L'en-tête du datagramme intermédiaire comporte l'adresse IP du noeud du réseau global destinataire, adresse IP publique sur le réseau sous-jacent. Un mécanisme de « tunnel » (« tunneling » en anglais) est en fait mis en oeuvre.

Pour le routage au niveau du réseau global, les différents routeurs possèdent chacun une table de routage mettant en correspondance l'adresse IP privée du destinataire d'un datagramme initial et l'adresse IP du routeur suivant sur le chemin de routage par lequel faire transiter ce datagramme initial. Le réseau global évoluant au cours du temps, ces tables doivent être tenues à jour de manière dynamique à chaque connexion ou déconnexion d'un routeur mobile. On notera que la description qui va suivre des tables de routage est faite dans le cas simple du réseau global à trois niveaux représenté sur la figure 1.

Plus précisément, en tenant compte du format des adresses IP des ordinateurs embarqués, une table de routage « consolidée », mémorisée et maintenue à jour par le routeur principal 5, met en correspondance, pour chaque infrastructure 7, 8 ou 9, l'identifiant <véhicule ID> d'un train et l'adresse IP du routeur de base auquel le routeur mobile de ce train est actuellement connecté. Par exemple, dans la table de routage « consolidée », l'identifiant ID2 du train 2 est en correspondance, pour l'infrastructure Wifi 9, avec l'adresse IP11b publique sur le réseau 10 du routeur de base 11 b avec lequel le routeur mobile 22 du train 2 est actuellement en connexion par l'intermédiaire de la liaison 14b.

Une table de routage de « base », mémorisée et maintenue à jour par chaque routeur de base, comporte la liste des identifiants <véhicule ID> des véhicules connectés, à l'instant considéré, à ce routeur de base ainsi que l'adresse IP du routeur mobile sur l'infrastructure associée. Par exemple, la table de routage « de base » du routeur de base 11 b comporte l'identifiant ID2 du train 2 actuellement connecté par l'intermédiaire de la liaison 14b et l'adresse IP 22 du routeur mobile 22 sur l'infrastructure 9. Par ailleurs, le routeur de base connaît l'adresse IP fixe du noeud situé immédiatement au-dessus de lui dans le réseau global, en l'occurrence le routeur principal 5 dans l'architecture à trois niveaux représentée sur la figure 1 .

Enfin, la table de routage « mobile », mémorisée et maintenue à jour par le routeur mobile, comporte, pour chaque infrastructure auquel il est actuellement relié, l'adresse IP publique d'un routeur de base de cette infrastructure avec lequel il est connecté. Par exemple, la table de routage « mobile » du routeur mobile 22 comporte, pour l'infrastructure 9, l'adresse IP11b du routeur de base 11 b auquel il est actuellement connecté en utilisant la liaison 14b.

Le fonctionnement de l'architecture de communication va maintenant être décrit en détail. Après le fonctionnement lorsque le train reste à l'intérieur de la zone de couverture d'une unique infrastructure, par exemple l'infrastructure 9, on décrira le fonctionnement permettant d'assurer la continuité de la communication lors du basculement entre deux infrastructures différentes.

### ETABLISSEMNT D'UNE LIAISON ET CONNEXION AU ROUTEUR

Au cours du déplacement du train 2 le long de la voie 20, les moyens de communication 29 contrôlés par le routeur mobile 22 émettent, à intervalles réguliers, des signaux radio de connexion, ou balises, destinés à découvrir d'éventuelles stations de base de l'infrastructure 9 pour établir une liaison sans fil. D'une manière générale, soit la couche physique de la liaison existe déjà et le routeur mobile 22 configure la couche logique de la liaison, c'est par exemple le cas d'une liaison du type Wifi ; soit la couche physique n'existe pas encore et au cours de la phase d'établissement de la liaison le routeur mobile 22 doit d'abord initialiser la couche physique, puis configurer la couche logique, c'est par exemple le cas d'une liaison du type GPRS.

Lorsque le train 2 entre dans la cellule 13b associée à la station de base 12b, celle-ci détecte les balises émises. Une procédure de configuration de la couche logique de la liaison sans fil 14b, de type Wifi, est alors exécutée entre la station de base 12b, agissant en tant qu'ordinateur « maître », et le routeur mobile 22, agissant en tant qu'ordinateur « esclave ». Le routeur mobile 22 reçoit une adresse IP publique sur l'infrastructure 9.

Une fois la liaison sans fil 14b établie entre la station de base 12b et le routeur mobile 22, ce dernier se connecte à un routeur de base associé à l'infrastructure 9.

Le routeur mobile 22 comporte, stockée dans ses moyens de mémorisation, une liste de routeurs de base comportant les adresses IP des routeurs de base auxquels il est susceptible de se connecter lors du déplacement du train 2 le long de la voie 20. Ainsi, le routeur mobile 22 essaie de se connecter à un routeur de base en testant les différentes adresses IP qu'indiquent cette liste de routeurs de base.

Dans le cas d'une infrastructure non propriétaire 8 ou 7, le routeur mobile connaît l'adresse IP du routeur de base 18 ou 17 associé à cette infrastructure. La connexion entre le routeur mobile 22 et le routeur de base correspondant se fait alors simplement. En variante, on pourrait se passer des routeurs de base dans le cas d'une infrastructure non-propriétaire, et un routeur mobile utilisant une telle infrastructure se connecterait directement au routeur principal.

La connexion est établie lorsque le routeur de base répond. De manière plus détaillée, la connexion établie entre le routeur mobile 22 et le routeur de base 11 b est constituée de deux paires de canaux logiques : une paire de canaux constituée d'un canal de communication et d'un canal de contrôle pour la communication montante ; et une paire de canaux constituée d'un canal de communication et d'un canal de contrôle pour la communication descendante. Les canaux de contrôle transmettent, entre autre, des messages périodiques de maintien de la connexion (messages du type « keep alive » en anglais).

Une fois connecté à un routeur de base, par exemple le routeur de base 11 b, l'adresse IP publique de ce dernier est mémorisée dans la table de routage mobile, ainsi qu'un identifiant de l'infrastructure 9, i.e. du moyen de communication utilisé pour établir la liaison sans fil 14b.

Après établissement de la connexion, le routeur mobile 22 apparaît, sur le réseau global de l'architecture de communication, comme un noeud de plus bas niveau connecté au routeur de base 11 b.

On notera qu'initialement, la liste de routeurs mémorisée par le routeur mobile 22 comporte les adresses IP des routeurs de base situés aux extrémités de départ et d'arrivée de la voie 20. Après connexion à un routeur de base, le routeur mobile 22 reçoit de celui-ci une série de nouvelles adresses IP de routeurs de base voisins pour mettre à jour la liste de routeurs de base mémorisée par le routeur mobile. Cette liste mise à jour sera utilisée pour établir une autre connexion à un autre routeur de base en prévision de la rupture de la connexion en cours.

Lors de l'établissement d'une connexion, le routeur de base 11 b met à jour dynamiquement sa table de routage « de base » en mémorisant l'adresse IP publique du routeur mobile 22, en l'associant à l'identifiant ID2 du train 2 à bord duquel est embarqué ledit routeur mobile 22, en décomposant l'adresse IP privée du routeur mobile.

Au moment de la connexion du routeur mobile 22, le routeur de base 11 b émet un message d'état de connexion en direction du routeur principal 5. Ce message indique l'IP du routeur de base émetteur, l'identifiant du train ID2 nouvellement connecté et un identifiant de l'infrastructure sous-jacente de cette connexion. Lors de la réception de ce message, le routeur principal 5 exécute un algorithme de mise à jour de sa table de routage « consolidée » consistant à mémoriser, dans une nouvelle rangée correspondant à l'identifiant ID2 du train 2 et, pour la colonne correspondant à l'infrastructure 9, l'adresse IP11b du routeur de base 11 b.

Dès que l'interruption de l'échange de messages périodiques indique aux routeurs mobile et de base la déconnexion, les différentes tables de routage sont mises à jour en conséquence.

### COMMUNICATION

En communication descendante, c'est-à-dire depuis l'ordinateur 1 vers l'ordinateur 4, l'ordinateur 1 au sol émet un datagramme initial à destination de l'ordinateur 4 embarqué, dont l'entête (« Header » en anglais) comporte l'adresse IP4 privée de l'ordinateur 4 destinataire.

Ce datagramme initial est intercepté par le routeur principal 5. Celui-ci lit l'en-tête à la recherche de l'adresse IP4 de l'ordinateur 4. L'algorithme de décodage d'adresse IP extrait, de l'adresse IP4, l'identifiant ID2 du train 2 à bord duquel se trouve l'ordinateur 4. Par une requête dans la table de routage « consolidée », le routeur principal 5 extrait l'adresse IP11b publique du routeur de base 11 b associé à l'identifiant ID2 et encapsule le datagramme initial dans un premier datagramme intermédiaire dont l'en-tête contient notamment l'adresse IP11b du routeur de base 11 b sur le réseau 10. Le premier datagramme intermédiaire est ensuite routé, sur le réseau 10, vers le routeur de base 11 b.

Le premier datagramme intermédiaire est lu par le routeur de base 11 b qui le « désencapsule » et lit l'adresse IP4 contenue dans le datagramme initial. Le routeur de base 11 b extrait de l'adresse IP4 l'identifiant ID2 du train 2. Par une requête sur la table de routage « de base », le routeur de base 11 b s'assure simplement que le routeur mobile 22 correspondant est encore connecté. Le routeur de base 11 b encapsule alors le datagramme initial dans un second datagramme intermédiaire dont l'en-tête comporte l'adresse IP publique du routeur mobile 22 et le transmet vers le routeur mobile 22, le long du canal de données descendant de la connexion, en utilisant entre autre la liaison sans fil 14b.

Le routeur mobile 22 « désencapsule » le second datagramme intermédiaire, et identifie l'ordinateur 4 destinataire sur la base de l'adresse IP4 présente dans l'en-tête du datagramme initial. Celui-ci est finalement transmis sur le réseau local 21 pour être reçu par l'ordinateur 4.

En communication montante, c'est-à-dire depuis l'ordinateur 4 vers l'ordinateur 1, le mécanisme est plus simple. En effet, l'architecture du système constitue une arborescence. Alors qu'en communication descendante, il est nécessaire de déterminer les routes, en communication montante, la route est unique car l'ensemble du trafic montant converge vers le routeur principal 5 avant d'être retransmis sur le premier réseau 3. La table de routage « consolidée » n'est donc pas utilisée en communication montante. Seule l'adresse IP du noeud de l'arborescence immédiatement au-dessus doit être connue du noeud devant router un datagramme. En cela, la communication est asymétrique. Si la communication entre deux noeuds du réseau global passe par l'intermédiaire d'un réseau sous-jacent, un mécanisme d'encapsulation est mis en oeuvre.

### ROAMING HORIZONTAL

Une fois établie, la liaison 14b ne dure que le temps de passage du train 2 dans la cellule 13b. Les moyens de communication du routeur mobile 22 comportent un moyen de prédétection de perte de lien qui détecte la rupture potentielle de la première connexion en scrutant l'un des deux canaux de contrôle de la connexion active.

Lors de la détection de la rupture potentielle de la connexion active, les données à transmettre en communication montante sont stockées dans une file de données du routeur mobile. Puisque la liaison 14b n'est que temporaire, pour que la communication entre l'équipement au sol et l'équipement embarqué soit continue, les moyens de communication 29 du routeur mobile 22 continuent à émettre des balises pour initier une autre liaison avec l'une des stations de base 12a, 12c des cellules 13a, 13c contiguës à la cellule 13b. Après établissement de cette autre liaison sans fil, le statut de la première liaison sans fil est vérifié pour savoir s'il y eu rupture de la liaison. Dans la négative, les données stockées dans la file sont transmises en utilisant la première connexion. Dans l'affirmative, le processus se poursuit avec l'établissement d'une nouvelle connexion avec un routeur de base comme cela a été décrit plus haut. En particulier, l'établissement d'une seconde connexion conduit à la mise à jour les tables de routage. Un pointeur sur la file de données de transmission montante est repositionné sur le dernier datagramme correctement transmis et les données correspondantes de la file de données sont alors transmise en utilisant la seconde connexion. La communication montante entre l'équipement embarqué et l'équipement au sol peut alors se poursuivre. Il est possible que certains datagrammes considérés comme perdus aient été en fait correctement transmis. Il y aura donc des doublons au niveau du routeur principal 5 que celui-ci filtrera avant de les émettre sur le premier réseau local 3.

Lors de la rupture de la première connexion et de l'établissement de la seconde connexion, le routeur principal 5 en a été notifié. La table de routage « consolidée » a été mise à jour de sorte qu'elle comporte, sur la ligne de l'identifiant ID2 du train 2, l'adresse IP non plus du premier routeur de base dans la colonne de l'infrastructure 9, mais l'adresse IP du deuxième routeur de base.

Le routeur principal 5 route, à un instant donné, les datagrammes IP interceptés sur le premier réseau local 3 vers l'un des routeurs de base connectés au routeur mobile 22, en se fondant sur les données présentes dans la table de routage « consolidée ». Puisqu'il s'agit d'un routage au niveau de l'ordinateur 5, le basculement est suffisamment rapide pour que cette opération soit totalement transparente.

En ce qui concerne l'intervalle de temps qui précède la rupture de la première connexion et l'établissement de la seconde connexion, le format de communication IP comporte des procédures de vérification d'erreurs de transmission et de réémission d'une requête par un ordinateur lorsque l'ordinateur destinataire n'a pas répondu. Ces procédures sont mises en oeuvre par le routeur principal 5 en communication descendante. Le routeur principal 5 comporte un tampon mémorisant systématiquement les derniers datagrammes routés en communication descendante pour lisser les éventuelles irrégularités et prévenir la perte de données.

Ainsi, les paquets transmis vers le premier routeur de base juste avant la rupture de la première connexion et dont on ne sait pas s'ils sont parvenus au routeur mobile 22, sont réémis vers le second routeur de base pour poursuivre la communication descendante en cours sans interruption.

La communication en cours peut ainsi basculer rapidement, de l'ordre de 50 ms, de la première connexion vers la seconde connexion.

### ROAMING VERTICAL

Les couvertures respectives de chaque infrastructure sont telles qu'elles forment une couverture continue, les zones d'ombre d'une infrastructure étant couvertes par les zones de couverture de ou des autres infrastructures. Ainsi, à un instant donnée, le routeur mobile 22 est en liaison avec au moins une infrastructure 7, 8 ou 9. Alors, dans la table de routage « consolidée », une case de la rangée correspondant à l'identifiant ID2 du train 2 comporte une adresse IP.

Eventuellement, là où les zones de couverture de plusieurs stations de base d'infrastructures différentes se recouvrent, le routeur mobile 22 établit simultanément plusieurs liaisons. Ceci est rendu possible car le routeur mobile 22 comporte plusieurs moyens de communication 27-29 qui sont respectivement dédiés à l'établissement d'une liaison sans fil d'une technologie particulière et/ou d'une liaison avec une infrastructure particulière.

Ainsi, alors que le routeur mobile 22 a déjà établi une première liaison avec une première infrastructure sur laquelle transite la communication entre les ordinateurs 1 et 4, lorsque le train 2 se déplace dans une zone de recouvrement qui correspond à la superposition, au moins partielle, des cellules de deux stations de base appartenant à des infrastructures différentes, le routeur mobile établit une seconde liaison avec la seconde infrastructure alors que le train 2 traverse la zone de recouvrement entre ces deux infrastructures. Lors de l'établissement de chacune de ces liaisons et donc des connexions correspondantes avec les routeurs de base, le routeur principal 5 a été notifié en conséquence. La table de routage « consolidée » a donc été mise à jour de sorte qu'elle comporte, au moment où le train 2 se trouve dans cette région de recouvrement, sur la ligne de l'identifiant ID2 du train 2, l'adresse IP du premier routeur de base associé à la première infrastructure, dans la colonne de la première infrastructure, et l'adresse IP du deuxième routeur de base associé à la seconde infrastructure, dans la colonne de la seconde infrastructure.

Lorsque plusieurs infrastructures réseau 7, 8 ou 9 offrent simultanément la possibilité de communiquer avec le train 2, le routeur principal 5 et le routeur mobile 22 arbitrent en sélectionnant l'infrastructure 7, 8 ou 9 la plus adaptée. Cette sélection s'effectue selon plusieurs règles qui sont configurables par l'exploitant. Par exemple, une règle de priorité « propriétaire » permet de choisir une infrastructure Wifi propriétaire par rapport à une autre infrastructure Wifi qui appartiendrait à un tiers ; une règle de priorité « bande passante» permet de choisir parmi les infrastructures disponibles celle qui assure une communication haut débit ; une règle de priorité « coût » permet de choisir l'infrastructure pour laquelle le prix des communications est le plus bas ; etc.

Le routeur mobile et le routeur principal mettent en oeuvre un mécanisme de mise en mémoire tampon des données à router au moment du basculement de la communication en cours de la première infrastructure vers la seconde infrastructure, similaire à ce qui a été décrit en détail lors du « roaming horizontal ».

### SECURITE

Dans la partie basse de l'architecture, la liaison sans fil entre la station de base et le routeur mobile est considérée comme n'étant pas fiable. Comme indiqué ci-dessus, il existe deux canaux de communications de contrôle qui transmettent respectivement des informations d'authentification, d'échange de clés de session, ainsi que des messages périodiques de maintien du lien sans fil (messages du type « keep alive » en anglais). Les messages périodiques transportent également une information d'état d'une file de données qui permet une éventuelle retransmission des données en cas de rupture temporaire, ayant une durée courte, inférieure à 4 secondes. Au-delà de cette durée, la file de données est vidée et les tables de routage sont mises à jour en indiquant que la connexion n'est plus active. Il est possible de configurer l'architecture pour ne pas retransmettre certains types de données. Dans le cas par exemple d'un « streaming » vidéo il n'est pas souhaitable de retransmettre les datagrammes perdus.

Par ailleurs, il est nécessaire de sécuriser la communication entre le routeur mobile 22 et le routeur de base correspondant 11 a-c, 17 ou 18. Ceci est rendu d'autant plus nécessaire que l'on fait transiter des données sensibles relatives à des informations d'exploitation du train 2. En particulier, des liaisons sous-jacentes Wifi et Wimax sont considérées comme non sécurisées, car, pour pouvoir assurer une itinérance horizontale performante, il est nécessaire de désactiver les couches de sécurité de ces protocoles, les algorithmes d'authentification couramment utilisés tels que WEP, AES et Radius, étant lents et ne permettant pas un basculement au niveau d'une transition entre cellules de l'ordre de 50 ms.

Selon l'invention, la sécurisation de la connexion entre le routeur de base et le routeur mobile s'effectue en une première étape d'authentification suivie d'une seconde étape de cryptage :

L'étape d'authentification a pour rôle de s'assurer de l'identité mutuelle des noeuds, routeur de base 11 a-c, 17 ou 18 et routeur mobile 22, qui communiquent via la liaison radio 14b non sécurisée. L'étape d'authentification selon l'invention utilise la méthodologie de cryptographie asymétrique, méthodologie connue de l'homme du métier fondée sur l'existence de clés privées et publiques codées sur une longueur de 512 bits. La clé privée est conservée secrète dans le routeur mobile 22 qui l'a générée. L'authentification est un processus qui consomme du temps. Pour minimiser ce temps lors de la transition entre cellules, l'architecture selon l'invention utilise un mécanisme de pré-authentification, initié en début de session, avec une clé de cryptage dite "système". Cette clé système n'est pas une clé de session car elle est codée dans le système.

Le trafic de données est toujours crypté entre le train et l'infrastructure au sol. Il existe deux moyens de cryptage qui peuvent être mis en oeuvre dans l'étape de cryptage. Ils sont respectivement fondés sur la clé de session et la clé système. Lorsque l'étape d'authentification du train 2 est achevée, la clé de session est créée, et la clé système est remplacée par la clé de session. Les clés de cryptage ont des longueurs variant de 64 bits à 512 bits par incrément de 64 bits.

Chaque véhicule de la flotte définit un sous-segment mobile du réseau. Ces segments mobiles disjoints forment un segment éparpillé. Avec l'architecture précédemment décrite, l'exploitant peut suivre simultanément plusieurs trains. En particulier le routeur principal 5 assure le routage IP entre le premier réseau local fixe et les routeurs des sous-segments mobiles, quelle que soit l'infrastructure intermédiaire sous-jacente.

## Revendications

1. Système pour la communication IP entre
un premier équipement informatique (1) fixe, au sol, connecté à un premier réseau local (3), et
un second équipement informatique (4) mobile, embarqué à bord d'un véhicule d'une pluralité de véhicules,
chaque véhicule de la pluralité de véhicules comportant son propre réseau local, ledit second équipement étant connecté au réseau local du véhicule à bord duquel il est embarqué,
comportant :
- un réseau global en forme d'arbre, ayant :
∘ un noeud racine, constitué par un routeur principal (5) connecté audit premier réseau local ;
∘ des noeuds de plus bas niveau, constitués par une pluralité de routeurs mobiles (22), chaque véhicule de la pluralité de véhicules comportant, connecté à son propre réseau local (21), l'un des routeurs mobiles de ladite pluralité de routeurs mobiles ; et,
∘ des noeuds intermédiaires, entre le noeud racine et les noeuds de plus bas niveau, parmi lesquels les noeuds intermédiaires situés juste au-dessus des noeuds de plus bas niveau sont constitués par des routeurs de base (17, 18, 11 a-c) fixes au sol,
chaque routeur participant à l'acheminement d'un datagramme IP le long d'un chemin de routage particulier du réseau global, et,
- au moins une infrastructure de communication (7, 8, 9), comportant des stations de base (7b, 8a-b, 12a-c) équipées de moyens de communication radio, le routeur principal comportant une table de routage consolidée, mémorisée et maintenue à jour par ledit routeur principal, ladite table consolidée mettant en correspondance pour chacune des dites au moins une infrastructure l'identifiant d'un véhicule de ladite pluralité de véhicules avec l'adresse IP du routeur de base auquel le routeur mobile (22) de ce véhicule est actuellement connecté
et chaque routeur de base étant associé à au moins une station de base et ayant une adresse IP publique sur l'infrastructure de communication à laquelle il est ainsi associé, chaque routeur de base comportant une table de routage de base mémorisée et maintenue à jour par le routeur de base considéré, ladite table de routage de base comportant la liste des identifiants des véhicules de ladite pluralité de véhicules connectés à l'instant considéré au routeur de base considéré ainsi que l'adresse IP, sur l'infrastructure associée, du routeur mobile du véhicule considéré,
chaque routeur mobile comportant :
- un moyen de communication radio (27, 28, 29) adapté pour établir, à un instant donné, une liaison sans fil (14b) avec l'une des stations de base (12b) de ladite au moins une infrastructure de communication (9),
- des moyens de mémorisation comportant une liste de routeurs de base comportant les adresses IP publiques des routeurs de base auxquels il est susceptible de se connecter lors du déplacement du véhicule,
- des moyens de connexion pour initier une connexion avec un routeur de base (11 b) à partir de ladite liste de routeurs de base, après qu'une liaison sans fil (14b) a été établie, le routeur mobile recevant une adresse IP publique sur l'infrastructure considérée,
- une table de routage mobile, mémorisée et mise à jour par ledit routeur mobile, comportant, pour chacune desdites au moins une infrastructure auquel il est actuellement connecté, l'adresse IP publique d'un routeur de base de cette infrastructure avec lequel il est connecté après établissement d'une connexion à un routeur de base,
ledit routeur mobile apparaissant alors, sur le réseau global, comme un noeud de plus bas niveau connecté audit routeur de base, et
un routeur mobile d'un véhicule étant apte à se déconnecter d'un premier routeur de base et à se connecter à un second routeur de base en communication descendante, c'est-à-dire depuis le premier équipement (1) vers le deuxième équipement (4), le premier équipement émet un datagramme initial à destination dudit deuxième équipement dont l'entête comporte l'adresse IP, privée par rapport au réseau local du véhicule de la pluralité de véhicules dans lequel se trouve ledit deuxième équipement, ledit datagramme initial est intercepté par ledit routeur principal, celui-ci extrait de l'entête l'identifiant du véhicule de la pluralité de véhicules à bord duquel se trouve le deuxième équipement puis, par requête dans la table de routage consolidée, ledit routeur principal extrait l'adresse publique du routeur de base associée à l'identifiant ainsi extrait et enfin encapsule le datagramme initial dans un premier datagramme intermédiaire destiné à l'adresse IP publique ainsi extraite, puis, sur réception dudit premier datagramme intermédiaire ledit routeur de base extrait l'identifiant du véhicule de l'entête du datagramme initial et par requête sur sa table de routage de base s'assure que le routeur mobile correspondant est encore connecté pour encapsuler alors le datagramme initial dans un second datagramme intermédiaire et le transmet vers le routeur mobile (22) en utilisant en outre la liaison sans fil (14b),
en communication montante, c'est-à-dire depuis le deuxième équipement (4) vers le premier équipement (1), le mécanisme est plus simple car l'ensemble du traffic montant converge vers le routeur principal (5) avant d'être retransmis sur ledit premier réseau (3).

2. Système selon la revendication 1, **caractérisé en ce que** les routeurs principal (5), de base (17, 18, 11 a-c) et mobiles (22) comportent, respectivement, une table de routage et des moyens de mise à jour dynamique des tables de routage, chaque routeur de base comportant un moyen d'émission d'un message d'état de connexion indiquant au routeur principal les routeurs mobiles venant de se connecter ou de se déconnecter dudit routeur de base.

3. Système selon la revendication 1 ou la revendication 2, **caractérisé en ce que** les moyens de connexion d'un routeur mobile (22) comportent un moyen de prédétection de perte de la connexion active et des moyens de stockage temporaire des données à transmettre lorsque la qualité de la connexion est réduite.

4. Système selon l'une quelconque des revendications 1 à 3, **caractérisé en ce qu'**un routeur de base (17, 18, 11 a-c) comporte des moyens de mémorisation comportant une liste de nouveaux routeurs de base, et **en ce qu'**un routeur mobile (22) comporte des moyens de mise à jour de sa liste de routeurs de base à partir de la liste de nouveaux routeurs de base du routeur de base auquel il se connecte.

5. Système selon l'une quelconque des revendications précédentes, **caractérisé en ce que** les routeurs de base (11 a-c) sont connectés à l'infrastructure de communication (9) à laquelle ils sont associés de manière à ce que la distance entre un routeur de base et une station de base (12a-c) de l'infrastructure associée corresponde à une unique maille de réseau.

6. Système selon l'une quelconque des revendications précédentes, **caractérisé en ce que** ladite au moins une infrastructure de communication (9) met en oeuvre une technologies de communication sans fil de courte portée du type Wifi, wimax ou l'équivalent.

7. Système selon l'une quelconque des revendications précédentes, **caractérisé en ce qu'**il comporte au moins des première et seconde infrastructures de communication (7, 8, 9) telles qu'une première cellule d'une première station de base de la première infrastructure se superpose, au moins partiellement, dans une région de recouvrement, à une seconde cellule d'une seconde station de base de la seconde infrastructure, et **en ce que** le routeur mobile (22) est apte à établir, simultanément, lorsque le véhicule (2) à bord duquel est embarqué ledit routeur mobile traverse ladite région de recouvrement, une première connexion avec un premier routeur de base (17, 18 ; 11 a-c) par l'intermédiaire d'une première liaison sans fil établie avec la première station de base (7b, 8a-b, 12a-c) de la première infrastructure (7, 8, 9) et une seconde connexion avec un second routeur de base (17, 18 ; 11 a-c) par l'intermédiaire d'une seconde liaison sans fil établie avec la seconde station de base (7a, 8a-b, 12a-c) de la seconde infrastructure (7, 8, 9).

8. Système selon la revendication 7, **caractérisé en ce que** les routeurs principal (5) et mobile (22) possèdent, respectivement, des moyens d'arbitrage permettant de sélectionner une route parmi une première route passant par ladite première infrastructure et une seconde route passant par ladite seconde infrastructure pour la communication en cours entre les premier et second équipements.

9. Système selon la revendication 8, **caractérisé en ce que** les première et seconde infrastructures (7, 8, 9) sont de type différent, mettant en oeuvre des technologies différentes sélectionnées parmi les technologies Wifi, wimax, GSM, UMTS, satellitaire ou l'équivalent, et **en ce que** chaque routeur mobile (22) comporte une pluralité de moyens de communication (27, 28, 29), chaque moyen de communication étant dédié à l'établissement d'une liaison sans fil avec une infrastructure (7, 8, 9) d'un type particulier.

10. Système selon l'une quelconque des revendications précédentes, **caractérisé en ce que**, ledit véhicule (2) faisant partie d'une pluralité de véhicules et chaque véhicule comportant un unique second réseau local (21) équipé d'un routeur mobile (22), une adresse IP du second équipement (4) sur ledit réseau global est privée et est obtenue en concaténant un identifiant commun à la pluralité de véhicules, un identifiant (ID2) du véhicule (2) et un identifiant dudit second équipement sur ledit second réseau local (21) du véhicule (2) à bord duquel est embarqué ledit second équipement, et **en ce que** les tables de routage des routeurs sol, tels que les routeurs principal et de base, stockent l'identifiant du véhicule (ID2) à bord duquel est embarqué ledit second équipement, et **en ce que** lesdits routeurs au sol comportent des moyens permettant d'extraire de l'adresse IP contenue dans l'en-tête d'un datagramme à router l'identifiant du véhicule (ID2) à bord duquel est embarqué le second équipement auquel est adressé ledit datagramme.

11. Système selon l'une quelconque des revendications précédentes, **caractérisé en ce que**, le routeur mobile (22) et un routeur de base (17, 18, 11 a-c) étant connectés par l'intermédiaire d'une infrastructure (7, 8, 9), et les adresses IP sur le réseau global étant privées, les routeurs mobile et de base comportent des moyens d'encapsulation et de « désencapsulation » des datagrammes qu'ils s'échangent pour qu'ils soient routés sur ladite infrastructure de communication.

12. Procédé de communication IP utilisant un système selon l'une quelconque des revendications 1 à 11 pour la communication entre un premier équipement informatique (1) fixe, au sol, connecté à un premier réseau local (3), et un second équipement informatique (4) mobile embarqué à bord d'un véhicule (2) d'une pluralité de véhicules, chaque véhicule de la pluralité de véhicules comportant un second réseau local équipé d'un routeur mobile, ledit second équipement étant connecté au second réseau local (21) du véhicule (2) à bord duquel il est embarqué, la communication sur le réseau global étant asymétrique en ce qu'en communication descendante, c'est-à-dire depuis le second équipement vers le premier équipement, il est nécessaire de déterminer les routes, alors qu'en communication montante, c'est-à-dire depuis le second équipement vers le premier équipement, la route est unique et le trafic montant converge vers le routeur principal avant d'être retransmis sur le premier réseau, seule l'adresse IP du noeud du réseau global immédiatement au-dessus doit être connue du noeud devant router un datagramme,
**caractérisé en ce que** le procédé comporte les étapes, mises en oeuvre par le routeur mobile (22) embarqué à bord dudit véhicule (2), consistant à :
a) établir une liaison sans fil entre une station de base (7b, 8a-b, 12a-c) d'une infrastructure de communication (7, 8, 9), la station de base étant équipée d'un moyen de communication radio, et ledit routeur mobile (22) comportant un moyen de communication radio (27, 28, 29) adapté ;
b) après que ladite liaison sans fil est établie avec une infrastructure (7, 8, 9), tester différentes adresses IP de routeurs de base (17, 18 ; 11a-c) reliés à ladite infrastructure, en attendant une réponse de l'un desdites routeurs de base ; et,
c) connecter le routeur mobile (22) au routeur de base ayant répondu.

13. Procédé selon la revendication 12, **caractérisé en ce que**, après initialisation de la connexion avec ledit routeur de base (17, 18, 11 a-c), le procédé comporte les étapes consistant à :
d) mémoriser, dans une table de routage du routeur mobile (22), l'adresse IP, sur ladite infrastructure de communication (7, 8, 9), du routeur de base auquel il vient de se connecter ; et,
e) mémoriser, dans une table de routage du routeur de base, l'adresse IP, sur ladite infrastructure de communication, du routeur mobile venant de se connecter, ainsi qu'une référence associée à l'adresse IP, sur le réseau global, dudit routeur mobile ;
f) émettre, depuis ledit routeur de base (17, 18 ; 11 a-c) vers un routeur principal (5) connecté audit premier réseau local (3), un message d'état de connexion contenant une référence associée à l'adresse IP sur le réseau global dudit routeur mobile ainsi que l'adresse IP sur le réseau global dudit routeur de base ; et,
g) mémoriser, dans une table de routage du routeur principal (5), l'adresse IP sur le réseau global du routeur de base (17, 18, 11 a-c) qui a émis ledit message d'état de connexion et la référence associée à l'adresse IP sur le réseau global dudit routeur mobile.

14. Procédé selon la revendication 12 ou la revendication 13, **caractérisé en ce que**, le routeur de base (17, 18, 11 a-c) auquel un routeur mobile (22) vient de se connecter transmet à ce routeur mobile d'autres adresses IP de routeurs de base pour la mise à jour de ladite liste de routeurs de base mémorisée par le routeur mobile.

15. Procédé selon l'une quelconque des revendications 12 à 14, **caractérisé en ce que** le routeur mobile (22) met en oeuvre un mécanisme de prédétection de perte de la connexion active (14b), et en cas de rupture potentielle de ladite connexion, le routeur mobile stocke dans une file de données les datagrammes à transmettre, exécute à nouveau les étape a) à c) pour établir une autre liaison sans fil et une autre connexion à un serveur de base, et, une fois qu'une nouvelle connexion est établie, transmet les datagrammes stockés sur ladite nouvelle connexion.

16. Procédé selon l'une quelconque des revendications 12 à 15, **caractérisé en ce que**, alors que le routeur mobile (22) est connecté à un premier routeur de base via une première liaison sans fil avec une première station de base d'une première infrastructure de communication, par une nouvelle itération des étapes a) à c), le routeur mobile établit une seconde liaison sans fil avec une seconde station de base d'une seconde infrastructure de communication et se connecte à un second routeur de base, et **en ce que** les routeurs principal (5) et mobile (22) arbitrent pour sélectionner une route parmi une première route passant par ladite première infrastructure et une seconde route passant par ladite seconde infrastructure pour la communication en cours entre les premier et second équipements.

17. Procédé selon la revendication 16, **caractérisé en ce que**, le véhicule (2) faisant partie d'une pluralité de véhicules et chaque véhicule (2) comportant un unique second réseau local (21) équipé d'un routeur mobile (22), l'adresse IP du second équipement (4) sur ledit réseau global étant alors privée et obtenue en concaténant un identifiant de ladite pluralité de véhicules, un identifiant dudit véhicule (ID2) et un identifiant dudit second équipement sur ledit second réseau local (21) dudit véhicule (2), l'étape de mise à jour de la table de routage du routeur principal (5) consiste à stocker l'identifiant dudit véhicule (ID2) en tant que référence associée à l'adresse IP dudit routeur mobile.

18. Procédé selon la revendication 17, **caractérisé en ce que**, pour la communication descendante du premier équipement (1) vers le second équipement (4), le routage exécuté par le routeur principal (5) comporte les étapes consistant à :
- intercepter un datagramme IP émis sur le premier réseau local (3), à destination du second équipement (4) ;
- extraire l'identifiant (ID2) du véhicule (2) à bord duquel est embarqué le second équipement (4) à partir de l'adresse IP de ce second équipement (4) indiquée dans la partie d'en-tête du datagramme IP intercepté ;
- lire, dans la table de routage du routeur principal (5), les adresses IP des routeurs de base (11a-c, 17, 18) qui, à l'instant considéré, sont en connexion avec le routeur mobile (22) dudit véhicule ;
- sélectionner un routeur de base parmi lesdits routeurs de base lus ; et,
- router le datagramme IP intercepté vers le routeur de base sélectionné.

19. Procédé selon l'une quelconque des revendications 12 à 18, **caractérisé en ce que**, pour la communication montante depuis le second équipement (4) vers le premier équipement (1), le routage exécuté par le routeur mobile (22) comporte les étapes consistant à :
- intercepter un datagramme IP émis sur le second réseau local (21) par ledit second équipement (4) à destination dudit premier équipement (1) ;
- lire, dans la table de routage du routeur mobile (22), l'adresse IP du routeur de base actuellement connecté audit routeur mobile (22) ; et,
- router le datagramme IP intercepté vers ledit routeur de base (5) en utilisant la liaison sans fil de l'infrastructure (7, 8, 9) associée audit routeur de base.

20. Procédé selon l'une quelconque des revendications 12 à 19, **caractérisé en ce que** les adresses IP sur le réseau global étant des adresses privées, l'étape de transmission d'un datagramme IP entre le routeur de base (17, 18, 11a-c) et le routeur mobile (22) par l'intermédiaire de l'infrastructure de communication comporte les étapes consistant à :
- encapsuler un datagramme IP initial au niveau d'un premier routeur parmi le routeur mobile et le routeur de base ;
- transmettre le datagramme encapsulé vers l'autre routeur à travers ladite infrastructure de communication associée ;
- « désencapsuler » le datagramme IP reçu, au niveau de l'autre routeur, pour en extraire ledit datagramme IP initial.

## Patentansprüche

1. System zur IP-Kommunikation zwischen
einer festen ersten Datenverarbeitungsvorrichtung (1) am Boden, die mit einem ersten lokalen Netzwerk (3) verbunden ist und
einer mobilen zweiten Datenverarbeitungsvorrichtung (4), die an Bord eines Fahrzeugs einer Mehrzahl von Fahrzeugen geladen ist,
wobei jedes Fahrzeug der Mehrzahl von Fahrzeugen sein eigenes lokales Netzwerk aufweist, wobei die zweite Vorrichtung mit dem lokalen Netzwerk des Fahrzeugs verbunden ist, an dessen Bord es geladen ist,
aufweisend:
- Ein globales Netzwerk in Form eines Baumes, aufweisend:
∘ Einen Wurzelknoten, gebildet durch einen Hauptrouter (5), der mit dem ersten lokalen Netzwerk verbunden ist;
∘ Knoten einer tieferen Ebene, die durch eine Mehrzahl von mobilen Routern (22) gebildet sind, wobei jedes Fahrzeug der Mehrzahl von Fahrzeugen, aufweist, verbunden mit seinem eigenen lokalen Netzwerk (21), einen der mobilen Router der Mehrzahl von mobilen Router; und
∘ Zwischenknoten zwischen dem Wurzelknoten und den Knoten einer tieferen Ebene unter denen die Zwischenknoten, die sich direkt über den Knoten einer tieferliegenden Ebene befinden und durch Basisrouter (17, 18, 11a-c) gebildet sind, die fest am Boden sind,
wobei jeder Router an der Wegfindung eines IP-Datengramms entlang eines bestimmten Routing-Wegs des globalen Netzwerks beteiligt ist und
- mindestens eine Kommunikationsinfrastruktur (7, 8, 9), aufweisend Basisstationen (7b, 8a-b, 12a-c), die mit Funkkommunikationsmitteln ausgestattet sind,
wobei der Hauptrouter eine konsolidierte Routing-Tabelle aufweist, die durch den Hauptrouter gespeichert und aktuell gehalten wird, wobei die konsolidierte Tabelle für jede der mindestens einen Infrastruktur die Identifikation eines Fahrzeugs der Mehrzahl von Fahrzeugen und die IP-Adresse des Basis-Routers, mit dem der mobile Router (22) dieses Fahrzeugs aktuell verbunden ist, einander zuordnet
und jeder Basisrouter mit mindestens einer Basisstation assoziiert ist und eine öffentliche IP-Adresse für die Kommunikationsinfrastruktur hat, mit der er so assoziiert ist, wobei jeder Basisrouter eine Basis-Routing-Tabelle aufweist, die von dem betrachteten Router gespeichert und aktuell gehalten wird, wobei die Basis-Routing-Tabelle die Liste der Identifikationen der Fahrzeuge der Mehrzahl von Fahrzeugen, die zum betrachteten Zeitpunkt mit dem betrachteten Basis-Router verbunden sind, sowie die IP-Adresse auf der assoziierten Infrastruktur des mobile Routers des betrachteten Fahrzeugs aufweist,
wobei jeder mobile Router aufweist:
- ein Mittel zur Funkkommunikation (27, 28, 29), eingerichtet zum Aufbauen, zu einem gegebenen Zeitpunkt, einer drahtlosen Verbindung (14b) mit der einen der Basisstationen (12b) der mindestens einen Kommunikationsinfrastruktur (9),
- Mittel zum Speichern, die eine Liste von Basis-Routern aufweisend die öffentlichen IP-Adressen der Basis-Router mit denen er imstande ist, sich bei Bewegung des Fahrzeugs zu verbinden, aufweisend,
- Mittel zum Verbinden zum Initiieren einer Verbindung mit einem Basisrouter (11b) ausgehend von der Liste von Basis-Routern, nachdem eine drahtlose Verbindung (14b) aufgebaut wurde, wobei der mobile Router eine öffentliche IP-Adresse für die betrachtete Infrastruktur empfängt,
- eine Tabelle für das mobile Routen, gespeichert und aktuell gehalten durch den mobilen Router, aufweisend, für jede der mindestens einen Infrastruktur, mit der er aktuell verbunden ist, der öffentlichen IP-Adresse eines Basis-Routers dieser Infrastruktur, mit dem er nach dem Aufbau einer Verbindung mit einem Basisrouter verbunden ist, wobei der mobile Router dann, auf dem globalen Netzwerk, als eine Knoten auf tieferer Ebene, der mit dem Basisrouter verbunden ist, erscheint, und
wobei ein mobiler Router eines Fahrzeugs dazu geeignet ist, sich von einem ersten Basisrouter zu trennen und sich mit einem zweiten Basisrouter in Abwärtskommunikation, d.h. ausgehend von der ersten Vorrichtung (1) in Richtung der zweiten Vorrichtung (4), zu verbinden, wobei die erste Vorrichtung ein initiales Datengramm an die zweite Vorrichtung sendet, dessen Nachrichtenkopf die IP-Adresse aufweist, die bezüglich des lokalen Netzwerks des Fahrzeugs der Mehrzahl von Fahrzeugen, in denen sich die zweite Vorrichtung befindet, privat ist, wobei das initiale Datengramm von dem Hauptrouter abgefangen wird, wobei dieser aus dem Nachrichtenkopf die Identifikation des Fahrzeugs der Mehrzahl von Fahrzeugen, an dessen Bord sich die zweite Vorrichtung befindet, extrahiert, anschließend der Haupt-Router durch Suchen in der konsolidierten Routing-Tabelle die öffentliche Adresse des Basisrouters, der mit der so extrahierten Identifikation assoziiert ist, extrahiert, und schließlich das initiale Datengramm in einem ersten Zwischen-Datengramm verkapselt, das an die so extrahierte öffentliche IP-Adresse gerichtet ist, dann der Basisrouter bei Empfang des ersten Zwischen-Datengramms die Identifikation des Fahrzeugs aus dem Nachrichtenkopf des initialen Datengramms extrahiert und sich durch Suchen in seiner Basis-Routing-Tabelle versichert, dass der entsprechende mobile Router noch verbunden ist, um dann das initiale Datengramm in einem zweiten Zwischen-Datengramm zu verkapseln und es zu dem mobilen Router (22) außerdem unter Verwendung der drahtlosen Verbindung (14b) zu übertragen,
in Aufwärtsrichtung, d.h. ausgehend von der zweiten Vorrichtung (4) in Richtung der ersten Vorrichtung (1) der Mechanismus einfacher ist, da die Menge des Aufwärtsdatenverkehrs in Richtung des Haupt-Routers (5) konvergiert, bevor er auf dem ersten Netzwerk (3) erneut übertragen wird.

2. System gemäß Anspruch 1, dadurch charakterisiert, dass der Hauptrouter (5), der Basis-Router (17, 18, 11a-c) und die mobilen Router (22) jeweils eine Routing-Tabelle und Mittel zum dynamischen Aktualisieren der Routing-Tabellen aufweisen, wobei jeder Basis-Router ein Mittel zum Senden einer Verbindungszustandsnachricht aufweist, die dem Hauptrouter anzeigt, dass die mobilen Router sich gerade mit dem Basisrouter verbunden oder von dem Basisrouter getrennt haben.

3. System gemäß Anspruch 1 oder Anspruch 2, dadurch charakterisiert, dass die Mittel zum Verbinden des mobilen Routers (22) ein Mittel zur Vordetektion des Verlusts der aktiven Verbindung und Mittel zum temporären Speichern der zu übertragenden Daten, wenn die Qualität der Verbindung reduziert ist, aufweisen.

4. System gemäß einem der Ansprüche 1 bis 3, dadurch charakterisiert, dass der Basisrouter (17, 18, 11a-c) Mittel zum Speichern aufweist, die eine Liste von neuen Basisroutern aufweist und dadurch, dass ein mobile Router (22) Mittel zum Aktualisieren seiner Liste von Basisroutern ausgehend von der der Liste von neuen Basisroutern des Basisrouters, mit dem er sich verbindet, aufweist.

5. System gemäß einem der vorhergehenden Ansprüche, dadurch charakterisiert, dass die Basisrouter (11a-c) mit der Kommunikationsinfrastruktur (9), mit der sie assoziiert sind, auf die Weise verbunden sind, dass die Entfernung zwischen einem Basisrouter und einer Basisstation (12a-c) der assoziierten Infrastruktur einer einzigen Netzwerkmasche entspricht.

6. System gemäß einem der vorhergehenden Ansprüche, dadurch charakterisiert, dass die mindestens eine Kommunikations-Infrastruktur (9) eine drahtlose Kommunikationstechnologie mit geringer Reichweite vom Typ Wifi, wimax oder einem Äquivalent implementiert.

7. System gemäß einem der vorhergehenden Ansprüche, dadurch charakterisiert, dass es mindestens eine erste und eine zweite Kommunikationsinfrastruktur (7, 8, 9) aufweist, so dass sich eine erste Zelle eine ersten Basisstation der ersten Infrastruktur wenigstens teilweise in einem Abdeckungsbereich mit einer zweiten Zelle einer zweiten Basisstation der zweiten Infrastruktur überlappt, und dadurch, dass der mobile Router (22) dazu geeignet ist, gleichzeitig, wenn das Fahrzeug (2) an dessen Bord der mobile Router gebracht ist, den Abdeckungsbereich durchquert, eine erste Verbindung mit einem ersten Basisrouter (17, 18; 11a-c) mittels einer ersten drahtlosen Verbindung, die mit einer ersten Basisstation (7b, 8a-b, 12a-c) der ersten Infrastruktur (7, 8, 9) aufgebaut ist, und eine zweiten Verbindung mit einem zweiten Basisrouter (17, 18; 11a-c) mittels einer zweiten drahtlosen Verbindung, die mit einer zweiten Basisstation (7a, 8a-b, 12a-c) der zweiten Infrastruktur (7, 8, 9) aufgebaut ist, aufzubauen.

8. System gemäß Anspruch 7, dadurch charakterisiert, das der Hauptrouter (5) und der mobile Router (22) jeweils Arbitriermittel aufweisen, die es ermöglichen, eine Route aus einer Route, die über die erste Infrastruktur führt, und einer Route, die über die zweite Infrastruktur führt, für die laufende Kommunikation zwischen der ersten Vorrichtung und der zweiten Vorrichtung auszuwählen.

9. System gemäß Anspruch 8, dadurch charakterisiert, dass die erste und die zweite Infrastruktur (7, 8, 9) von einem unterschiedlichen Typ sind und unterschiedliche Technologien, ausgewählt aus den Technologien Wifi, wimax, GSM, UMTS, Satellit oder einem Äquivalent, implementieren und dadurch, dass jeder mobile Router (22) eine Mehrzahl von Kommunikationsmitteln (27, 28, 29) aufweist, wobei jedes Kommunikationsmittel für den Aufbau einer drahtlosen Verbindung mit einer Infrastruktur (7, 8, 9) eines bestimmten Typs dediziert ist.

10. System gemäß einem der vorhergehenden Ansprüche, dadurch charakterisiert, dass das Fahrzeug (2) Teil einer Mehrzahl von Fahrzeugen ist und jedes Fahrzeug ein einziges zweites lokales Netzwerk (21), das mit einem mobilen Router (22) ausgestattet ist, eine IP-Adresse der zweiten Vorrichtung (4) auf dem globalen Netzwerk privat ist und durch Aneinanderhängen einer der Mehrzahl von Fahrzeugen gemeinsamen Identifikation, einer Identifikation (ID2) des Fahrzeugs (2) und einer Identifikation der zweiten Vorrichtung auf dem zweiten lokalen Netzwerk (21) des Fahrzeugs (2), an dessen Bord die zweite Vorrichtung gebracht ist, erhalten wird, und dadurch, dass die Routing-Tabellen der Router am Boden wie die Haupt- und Basis-Router die Identifikation des Fahrzeugs (ID2), an dessen Bord die zweite Vorrichtung gebracht ist, speichern und dadurch, dass die Router am Boden Mittel aufweisen, die es ermöglichen, aus der IP-Adresse, die in dem Nachrichtenkopf eines zu routenden Datengramms enthalten ist, die Identifikation des Fahrzeugs (ID2), an dessen Bord die zweite Vorrichtung gebracht ist, an die das Datengramm adressiert ist, zu extrahieren.

11. System gemäß einem der vorhergehenden Ansprüche, dadurch charakterisiert, wenn der mobile Router (22) und ein Basis-Router (17, 18, 11a-c) mittels einer Infrastruktur (7, 8, 9) verbunden sind und die IP-Adressen auf dem globalen Netzwerk privat sind, der mobile Router und der Basis-Router Mittel zum Verkapseln und "Entkapseln" der Datengramme, die sie austauschen, aufweisen, damit sie über die Kommunikationsinfrastruktur geroutet werden.

12. Verfahren zur IP-Kommunikation unter Verwendung eines System gemäß einem der Ansprüche 1 bis 11 für die Kommunikation zwischen einer festen ersten Datenverarbeitungsvorrichtung (1) am Boden, die mit einem ersten lokalen Netzwerk (3) verbunden ist, und einer mobilen zweiten Datenverarbeitungsvorrichtung (4), die an Bord eines Fahrzeugs einer Mehrzahl von Fahrzeugen geladen ist, wobei jedes Fahrzeug der Mehrzahl von Fahrzeugen ein zweites lokales Netzwerk, ausgestattet mit einem mobilen Router, aufweist, wobei die zweite Vorrichtung mit dem zweiten lokalen Netzwerk (21) des Fahrzeugs (2), an dessen Bord es gebracht ist, verbunden ist, wobei die Kommunikation auf dem globalen Netzwerk asymmetrisch ist, insofern, dass bei der Abwärtskommunikation, d.h. ausgehend von der zweiten Vorrichtung zu der ersten Vorrichtung es erforderlich ist, die Routen zu ermitteln, während es bei der Aufwärtskommunikation, d.h. ausgehend von der zweiten Vorrichtung zu der ersten Vorrichtung, die Route eindeutig ist und der Aufwärts-Datenverkehr in Richtung des Haupt-Routers konvergiert, bevor er auf dem ersten Netzwerk erneut übertragen wird, nur die IP-Adresse des Knotens des globalen Netzwerks unmittelbar oberhalb dem Knoten bekannt sein muss, bevor ein Datengramm geroutet wird,
dadurch charakterisiert, dass das Verfahren die Schritte, durchgeführt von dem mobilen Router (22), der an Bord des Fahrzeugs (2) gebracht ist, aufweist, bestehend aus:
a) Aufbauen einer drahtlosen Verbindung zwischen einer Basisstation (7b, 8a-b, 12a-c) einer Kommunikationsinfrastruktur (7, 8, 9), wobei die Basisstation mit einem Funkkommunikationsmittel ausgestattet ist und der mobile Router (22) ein angepasstes Funkkommunikationsmittel (27, 28, 29) aufweist;
b) nachdem die drahtlose Verbindung mit einer Infrastruktur (7, 8, 9) aufgebaut ist, Testen unterschiedlicher IP-Adressen von Basisroutern (17, 18; 11a-c), die mit der Infrastruktur verbunden sind, während des Wartens auf eine Antwort von einem der Basis-Router; und
c) Verbinden des mobilen Routers (22) mit dem Basis-Router, der geantwortet hat.

13. Verfahren gemäß Anspruch 12, dadurch charakterisiert, dass, nach der Initialisierung der Verbindung mit dem Basis-Router (17, 18, 11a-c) das Verfahren die Schritte aufweist bestehend aus:
d) Speichern, in einer Routing-Tabelle des mobilen Routers (22), der IP-Adresse des Basis-Routers auf der Kommunikationsinfrastruktur (7, 8, 9), mit der er sich gerade verbunden hat; und
e) Speichern, in einer Routing-Tabelle des Basis-Routers, der IP-Adresse des mobilen Routers auf der Kommunikations-Infrastruktur, der sich gerade verbunden hat, ebenso wie eine mit der IP-Adresse des mobilen Routers auf dem globalen Netzwerk assoziierte Referenz;
f) Senden, ausgehend von dem Basis-Router (17, 18; 11a-c) in Richtung eines Haupt-Routers (5), der mit dem ersten lokalen Netzwerk (3) verbunden ist, einer Verbindungszustandsnachricht, die eine Referenz aufweist, die mit der IP-Adresse auf dem globalen Netzwerk des mobilen Routers ebenso wie der IP-Adresse auf dem globalen Netzwerk des Basis-Routers assoziiert ist; und
g) Speichern, in einer Routing-Tabelle des Haupt-Routers (5), der IP-Adresse auf dem globalen Netzwerk des Basis-Routers (17, 18, 11a-c), der die Verbindungszustandsnachricht und die Referenz, die mit einer IP-Adresse auf dem globalen Netzwerk des mobilen Routers assoziiert ist, gesendet hat.

14. Verfahren gemäß Anspruch 12 oder Anspruch 13, dadurch charakterisiert, dass der Basis-Router (17, 18, 11a-c), mit dem sich der mobile Router (22) gerade verbunden hat, an diesen mobilen Router andere IP-Adressen von Basis-Routern zum Aktualisieren der von dem mobilen Router gespeicherten Liste von Basis-Routern überträgt.

15. Verfahren gemäß einem der Ansprüche 12 bis 14, dadurch charakterisiert, dass der mobile Router (22) einen Mechanismus zur Vordetektion des Verlusts der aktiven Verbindung (14b) implementiert und im Fall eines Potentiellen Abbruchs der Verbindung der mobile Router in einer Datenwarteschlange die zu sendenden Datengramme speichert, erneut die Schritte a) bis c) zum Aufbauen einer anderen drahtlosen Verbindung und eine andere Verbindung mit einem Basis-Server ausführt und, sobald eine neue Verbindung aufgebaut ist, die gespeicherten Datengramme auf der neuen Verbindung überträgt.

16. Verfahren gemäß einem der Ansprüche 12 bis 15, dadurch charakterisiert, dass, obwohl der mobile Router (22) mit einem ersten Basis-Router über eine erste drahtlose Verbindung mit einer ersten Basisstation einer ersten Kommunikations-Infrastruktur verbunden ist, durch eine neue Iteration der Schritte a) bis c) der mobile Router eine zweite drahtlose Verbindung mit einer zweiten Basisstation einer zweiten Kommunikationsinfrastruktur aufbaut und sich mit einem zweiten Basisrouter verbindet und dadurch, dass der Hauptrouter (5) und der mobile Router (22) arbitrieren, um eine Route unter einer ersten Route, die über die erste Infrastruktur führt, und einer zweiten Route, die über die zweite Infrastruktur führt, für die laufende Kommunikation zwischen der ersten Vorrichtung und der zweiten Vorrichtung auszuwählen.

17. Verfahren gemäß Anspruch 16, dadurch charakterisiert, dass das Fahrzeug (2) einen Teil einer Mehrzahl von Fahrzeugen bildet, und jedes Fahrzeug (2) ein einziges zweites lokales Netzwerk (21) aufweist, das mit einem mobilen Router (22) ausgestattet ist, wobei die IP-Adresse der zweiten Vorrichtung (4) auf dem globalen Netzwerk deshalb privat ist und durch Aneinanderhängen einer Identifikation der Mehrzahl von Fahrzeugen, einer Identifikation (ID2) des Fahrzeugs (ID2) und einer Identifikation der zweiten Vorrichtung auf dem zweiten lokalen Netzwerk (21) des Fahrzeugs (2), erhalten wird, wobei der Schritt des Aktualisierens der Routing-Tabelle des Haupt-Routers (5) aus dem Speichern der Identifikation des Fahrzeugs (ID2) als mit der IP-Adresse des mobilen Routers assoziierten Referenz besteht.

18. Verfahren gemäß Anspruch 17, dadurch charakterisiert, dass für die Abwärtskommunikation der ersten Vorrichtung (1) in Richtung der zweiten Vorrichtung (4) das von dem Haupt-Router (5) durchgeführte Routing die Schritte ausführt bestehend aus:
- Abfangen eines IP-Datengramms, das auf dem ersten lokalen Netzwerk (3) zu der zweiten Vorrichtung (4) gesendet wird;
- Extrahieren der Identifikation (ID2) des Fahrzeugs (2), an dessen Bord die zweite Vorrichtung (4) gebracht ist, ausgehend von der IP-Adresse der zweiten Vorrichtung (4), die in dem Nachrichtenkopfteil des abgefangenen IP-Datengramms angegeben ist;
- Lesen, in der Routing-Tabelle des Haupt-Routers (5), der IP-Adressen der Basis-Router (11a-c, 17, 18), die zum betrachteten Zeitpunkt mit dem mobilen Router (22) des Fahrzeugs verbunden sind;
- Auswählen eines Basis-Routers aus den gelesenen Basis-Routern; und
- Routen des abgefangenen IP-Datengramms in Richtung des ausgewählten Basis-Routers.

19. Verfahren gemäß einem der Ansprüche 12 bis 18, dadurch charakterisiert, dass für die Aufwärtskommunikation ausgehend von der zweiten Vorrichtung (4) in Richtung der ersten Vorrichtung (1) das von dem mobilen Router (22) ausgeführte Routing die Schritte aufweist bestehend aus:
- Abfangen eines IP-Datengramms, das auf dem zweiten lokalen Netzwerk (21) durch die zweite Vorrichtung (4) zu der ersten Vorrichtung (1) gesendet wird;
- Lesen, in der Routing-Tabelle des mobilen Routers (22), der IP-Adresse des Basis-Routers, der aktuell mit dem mobilen Router (22) verbunden ist; und
- Routen des abgefangenen IP-Datengramms in Richtung des Basis-Routers (5) unter Verwendung der drahtlosen Verbindung der Infrastruktur (7, 8, 9), die mit dem Basis-Router verbunden ist.

20. Verfahren gemäß einem der Ansprüche 12 bis 19, dadurch charakterisiert, dass die IP-Adressen auf dem globalen Netzwerk private Adressen sind, wobei der Schritt des Übertragens eines IP-Datengramms zwischen dem Basis-Router (17, 18, 11a-c) und dem mobilen Router (22) mittels der Kommunikationsinfrastruktur die Schritte aufweist bestehend aus:
- Verkapseln eines initialen IP-Datengramms auf Höhe eines ersten Routers von dem mobilen Router und dem Basis-Router;
- Übertragen des verkapselten Datengramms zu dem anderen Router über die assoziierte Kommunikations-Infrastruktur;
- "Entkapseln" des empfangenen IP-Datengramms auf Höhe des anderen Routers, um daraus das ursprüngliche IP-Datengramm zu extrahieren.

## Claims

1. System for IP communication between a first piece of computing equipment (1) which is fixed, located on the ground and connected to a first local network (3) and a second piece of computing equipment (4) which is mobile and located on board one vehicle of a plurality of vehicles, each vehicle of the plurality of vehicles comprising a second local network, said second piece of computing equipment being connected to the second local network of the vehicle on which it is located, comprising :
a global network of the tree type having:
o A root not, formed by a main router (5) connected to said first local network;
o lower-level nodes formed by a plurality of mobile routers (22), each vehicle of the plurality of vehicles comprising, connected to the second local network (21) thereof, one of the mobile routers of said plurality of mobile routers; and
o intermediate nodes, between the root node and the lower-level nodes, among which the intermediate nodes located just above the lower-level nodes are formed by base routers (17, 18, 11a-c) which are fixed and located on the ground,
each router participating to the transmission of an IP datagram on a particular routing path of the global network, and
at least one communication infrastructure (7, 8, 9) comprising base stations (7b, 8a-b, 12a-c) equipped with radio communication means,
the main router comprising a consolidated routing table, memorised and updated by said main router, said consolidated routing table putting in correspondence, for each of said at least one infrastructure, the identifier of one vehicle of the plurality of vehicles, an IP address of the base router with which the mobile router (22) of this vehicle is currently connected and each base router being associated with a base station and having a public IP address on the communication infrastructure with which it is associated in this way,
each base router comprising a base routing table, memorised and updated by this base router, said base routing table comprising a list of identifiers of the vehicles of the plurality of vehicles connected at the current time to the base router considered together with the IP address on the associated infrastructure of the mobile router of the vehicle considered,
each mobile router comprising:
- a radio communication means (27, 28, 29) suitable for establishing, at a given moment, a wireless link (14b) with one of the base stations (12b) of said at least one communication infrastructure (9),
- storage means comprising a list of base routers comprising the IP addresses of those base routers with the associated communication infrastructures of which it is able to establish a wireless link, and
- connection means for initiating a connection with a base router (11 b) from said list of base routers, after a wireless link (14b) has been established, the mobile router receiving a public IP address on the infrastructure considered,
- a mobile routing table, memorised and updated by said mobile router, comprising, for each of said at least one infrastructure to with it is currently connected, the public IP address of a base router of this infrastructure with which it is connected after establishing a connection to a base router, the mobile router thus appearing on the global network as a lower-level node connected to said base router,
a mobile router of a vehicle being able to disconnect itself from a first base router and to connect itself to a second base router
in downlink communication, i.e. from the first piece of computing equipment (1) to the second piece of computing equipment (4), the first piece of computing equipment emitting an initial datagram to the second piece of computing equipment whose header comprises its private IP address relative to the local network of the vehicle of the plurality of vehicles on board which is located the second piece of computing equipment, said initial datagram is intercepted by said main router, this latter extracts form the header the identifier of the vehicle of the plurality of vehicles on board which is located the second piece of computing equipment, then, by requesting the consolidated routing table, said main router extracts the public address of the base router associated to the identifier thus extracted and then encapsulates the initial datagram into a first intermediary datagram destined to the public IP address thus extracted, then, on receipt of the first intermediary datagram, the base router extracts the identifier of the vehicle form the header of the initial datagram and by means of a request on its base routing table checks whether the corresponding mobile router is still connected before encapsulating the initial datagram into a second intermediary datagram and transmits it to the mobile router (22) using the wireless link (14b),
in uplink communication, i.e. from the second piece of computing equipment (4) to the first piece of computing equipment (1), the mechanism is simpler because the entire uplink traffic converges to the main router (5) before being retransmitted on the first network (3).

2. System according to claim 1, **characterised in that** the main router (5), the base routers (17, 18, 11 a-c) and the mobile routers (22) respectively comprise a routing table and means for dynamically updating the routing tables, each base router comprising a means for transmitting a connection status message informing the main router about the mobile routers which have just connected to or disconnected from said base router.

3. System according to either claim 1 or claim 2, **characterised in that** the means for connecting a mobile router (22) comprise means for pre-detecting the loss of the active connection and means for temporarily storing data to be transmitted when the quality of the connection is reduced.

4. System according to any one of claims 1 to 3, **characterised in that** a base router (17, 18, 11 a-c) comprises storage means comprising a list of new base routers, and **in that** a mobile router (22) comprises means for updating its list of base routers on the basis of the list of new base routers in the base router to which it connects.

5. System according to any one of the preceding claims, **characterised in that** the base routers (11 a-c) are connected to the communication infrastructure (9) with which they are associated in such a way that the distance between a base router and a base station (12a-c) of the associated infrastructure corresponds to a single link in the network.

6. System according to any one of the preceding claims, **characterised in that** said at least one communication infrastructure (9) uses a short-range wireless communication technology of the WiFi type, WiMAX type or the like.

7. System according to any one of the preceding claims, **characterised in that** it comprises at least first and second communication infrastructures (7, 8, 9) in such a way that a first cell of a first base station of the first infrastructure is superposed, at least in part, in an overlap region, on a second cell of a second base station of the second infrastructure, and **in that** the mobile router (22) is suitable for establishing, simultaneously, when the vehicle (2) on which said mobile router is located passes through said overlap region, a first connection with a first base router (17, 18; 11 a-c) via a first wireless link established with a base station (7b, 8a-b, 12a-c) of the first infrastructure (7, 8, 9) and a second connection with a second base router (17, 18; 11 a-c) via a second wireless link established with a base station (7a, 8a-b, 12a-c) of the second infrastructure (7, 8, 9).

8. System according to claim 7, **characterised in that** the main (5) and mobile (22) routers respectively have arbitration means which allow a route to be selected from a first route passing through said first infrastructure and a second route passing through said second infrastructure for ongoing communication between the first and second pieces of equipment.

9. System according to claim 8, **characterised in that** the first and second infrastructures (7, 8, 9) are of different types, using different technologies selected from WiFi technology, WiMAX technology, GSM technology, UMTS technology, satellite technology or the like, and **in that** each mobile router (22) comprises a plurality of communication means (27, 28, 29), each communication means being dedicated to establishing a wireless link with an infrastructure (7, 8, 9) of a particular type.

10. System according to any one of the preceding claims, **characterised in that**, said vehicle (2) being part of a plurality of vehicles and each vehicle comprising a single second local network (21) equipped with a mobile router (22), an IP address of the second piece of equipment (4) on said global network is private and is obtained by concatenating an identifier common to the plurality of vehicles, an identifier (ID2) of the vehicle (2) and an identifier of said second piece of equipment on said second local network (21) of the vehicle (2) on which said second piece of equipment is located, and **in that** the routing tables of the ground routers, such as the main and base routers, store the identifier of the vehicle (ID2) on which said second piece of equipment is located, and **in that** said ground routers comprise means which make it possible to extract, from the IP address contained in the header of a datagram to be routed, the identifier of the vehicle (ID2) on which the second piece of equipment, to which said datagram is addressed, is located.

11. System according to any one of the preceding claims, **characterised in that**, the mobile router (22) and a base router (17, 18, 11a-c) being connected via an underlying infrastructure (7, 8, 9), and the IP addresses on the global network being private, the mobile and base routers comprise means for encapsulating and "de-encapsulating" the datagrams which they exchange to allow them to be routed over said communication infrastructure.

12. IP communication method using the system according to any one of claims 1 to 11 for communication between a first piece of computing equipment (1) which is fixed, located on the ground and connected to a first local network (3) and a second piece of computing equipment (4) which is mobile and located on board one vehicle (2) of a plurality of vehicles, each vehicle of the plurality of vehicles comprising a second local network equipped with a mobile router, said second piece of equipment being connected to the second local network (21) of the vehicle (2) on which it is located, the communication on the global network being asymmetric in that, in the downlink communication, i.e. from the first piece of computing equipment to the second piece of computing equipment, it is necessary to determine the routing path, whereas in uplink communication, i.e. from the second piece of computing equipment to the first piece of computing equipment, the routing path is unique and the uplink traffic converges at the main router before being retransmitted on the first network, only the IP address of the node of the global network immediately above is to be known by the node touting a datagram,
**characterised in that** the method comprises the steps, carried out by the mobile router (22) on board said vehicle (2), of:
a) establishing a wireless link between a base station (7b, 8a-b, 12a-c) of a communication infrastructure (7, 8, 9), the base station being equipped with a radio communication means, and said mobile router (22) comprising a suitable radio communication means (27, 28, 29);
b) after said wireless link is established with an infrastructure (7, 8, 9), testing different IP addresses of base routers (17, 18; 11a-c) connected to said infrastructure, and awaiting a response from one of said base routers; and,
c) connecting the mobile router (22) to the base router which has responded.

13. Method according to claim 12, **characterised in that**, after the connection with said base router (17, 18, 11 a-c) has been initialised, the method comprises the steps of:
d) storing, in a routing table of the mobile router (22), the IP address, on said communication infrastructure (7, 8, 9), of the base router to which it has just connected; and
e) storing, in a routing table of the base router, the IP address, on said communication infrastructure, of the mobile router which has just been connected, as well as a reference associated with the IP address, on the global network, of said mobile router;
f) transmitting, from said base router (17, 18; 11 a-b) to a main router (5) connected to said first local network (3), a connection status message containing a reference associated with the IP address on the global network of said mobile router as well as the IP address on the global network of said base router; and
g) storing, in a routing table of the main router (5), the IP address on the global network of the base router (17, 18, 11a-c) which has transmitted said connection status message and the reference associated with the IP address on the global network of said mobile router.

14. Method according to either claim 12 or claim 13, **characterised in that** the base router (17, 18, 11 a-c), to which a mobile router (22) has just connected, transmits to this mobile router other IP addresses of base routers to update said list of base routers stored in the mobile router.

15. Method according to any one of claims 12 to 14, **characterised in that** the mobile router (22) uses a mechanism for pre-detecting the loss of the active connection (14b), and if there is a possibility of said connection being broken, the mobile router stores the datagrams to be transmitted in a data file, executes steps a) to c) again to establish another wireless link and another connection to a base server and, once the new connection has been established, transmits the stored datagrams over said new connection.

16. Method according to any one of claims 12 to 15, **characterised in that**, while the mobile router (22) is connected to a first base router via a first wireless link with a first base station of a first communication infrastructure, the mobile router establishes, by repeating steps a) to c), a second wireless link with a second base station of a second communication infrastructure and connects to a second base router, and **in that** the main (5) and mobile (22) routers arbitrate to select a route from a first route passing through said first infrastructure and a second route passing through said second infrastructure for ongoing communication between the first and second pieces of equipment.

17. Method according to claim 16, **characterised in that**, the vehicle (2) being part of a plurality of vehicles and each vehicle (2) comprising a single second local network (21) equipped with a mobile router (22), the IP address of the second piece of equipment (4) on said global network thus being private and being obtained by concatenating an identifier of said plurality of vehicles, an identifier (ID2) of said vehicle and an identifier of said second piece of equipment on said second local network (21) of said vehicle (2), the step of updating the routing table of the main router (5) consists of storing the identifier of said vehicle (ID2) in the form of a reference associated with the IP address of said mobile router.

18. Method according to claim 17, **characterised in that**, for downlink communication from the first piece of equipment (1) to the second piece of equipment (4), the routing executed by the main router (5) comprises the steps of:
- intercepting an IP datagram transmitted over the first local network (3) bound for the second piece of equipment (4);
- extracting the identifier (ID2) of the vehicle (2) on which the second piece of equipment (4) is located from the IP address of said second piece of equipment (4) given in the header part of the intercepted IP datagram;
- reading, from the routing table of the main router (5), the IP addresses of the base routers (11 a-c, 17, 18) which, at the moment in question, are connected to the mobile router (22) of said vehicle;
- selecting a base router from said read base routers; and,
- routing the intercepted IP datagram to the base router selected.

19. Method according to any one of claims 12 to 18, **characterised in that**, for uplink communication from the second piece of equipment (4) to the first piece of equipment (1), the routing executed by the mobile router (22) comprises the steps of:
- intercepting an IP datagram transmitted by said second piece of equipment (4) over the second local network (21) bound for the first piece of equipment (1);
- reading, from the routing table of the mobile router (22), the IP address of the base router currently connected to said mobile router (22); and,
- routing the intercepted IP datagram to said base router (5) using the wireless link of the infrastructure (7, 8, 9) associated with said base router.

20. Method according to any one of claims 12 to 19, **characterised in that**, the IP addresses on the global network being private addresses, the step of transmitting an IP datagram between the base router (17, 18, 11a-c) and the mobile router (22) via the communication infrastructure comprises the steps of:
- encapsulating an initial IP datagram at a first router, this being either the mobile router or the base router;
- transmitting the encapsulated datagram to the other router via said associated communication infrastructure;
- "de-encapsulating" the IP datagram received at the other router to extract said initial IP datagram.
